# EUROPÄISCHE PATENTANMELDUNG

(11) **EP 0 552 676 A1**
(43) Veröffentlichungstag der Anmeldung: **28.07.1993**
(21) Anmeldenummer: 93100546.6
(22) Anmeldetag: 15.01.1993
(51) Int. Cl.: B64G 1/58, F02K 9/97, F42B 15/34

(54) **Schutzsystem für hohen thermischen Belastungen oder thermischen Belastungen und Staudruckbelastungen ausgesetzte Bauteile**

(30) Priorität: 22.01.1992 DE 4201600
(71) Anmelder: DORNIER GMBH, D-88004 Friedrichshafen (DE)
(72) Erfinder: Stockfleth, Holger, Dipl.-Ing., W-7778 Markdorf (DE)
(74) Vertreter: Landsmann, Ralf, Dipl.-Ing.

(57) **Zusammenfassung**

System zum Schutz von hohen thermischen Belastungen oder thermischen Belastungen in Verbindung mit Staudruckbelastungen ausgesetzten Bauteilen, wie wiedereintrittsfähige Raumfahrzeuge oder im Überschall oder Hyperschall fliegende Flugzeuge, sowie Teile von Antrieben, beispielsweise Gasaustrittsdüsen und Brennkammern von Raketenmotoren ,wobei das Schutzsystem eine den beeinflußten Bereichen der Bauteile (**2**) vorgesetzte ablativ wirkende Isolationsschicht (**6**), eine die Isolationsschicht (**6**) in Einwirkungsrichtung der Belastungen überdeckende Schutzbeschichtung (**14**) und zwischen der Schutzbeschichtung (**14**) und der Isolationsbeschichtung (**6**) eine in die freie Atmosphäre mündende Druckgasableitung (**16; 18, 18'; 19**) aufweist.

## Beschreibung

Die Erfindung betrifft ein Schutzsytem gemäß den gattungsbildenden Merkmalen des Anspruches 1.

Beispielsweise mit Überschall- oder Hyperschallgeschwindigkeit fliegende Fluggeräte oder z. B. sogenannte wiedereintrittsfähige Raumfahrzeuge, wie Raumgleiter, unbemannte Nutzlastkapseln oder dergleichen, sind durch die während bestimmter Flugphasen und insbesondere beim atmosphärischen Eintritt auftretende Reibung extrem hohen thermischen Belastungen von zum Teil mehr als 5000° C in Kombination mit extrem hohen dynamischen Belastungen ausgesetzt.
Derartigen, kombinierten Belastungen sind auch Teile von Antrieben, wie z.B. in der Abgasströmung liegende Oberflächen bzw. Wände von Strahldüsen oder Brennkammern von Raketenmotoren unterworfen.,

Der Strukturaufbau bei derartigen Geräten erfordert geringstmögliches Strukturgewicht bei bestmöglichem Widerstandsverhalten gegenüber den auftretenden Belastungen.
Die Struktur und Beplankung so belasteter Fluggeräte oder Raumfahrzeuge erfordert insbesondere für den Eintritt oder den Wiedereintritt in die Atmosphäre, ein den thermischen und dynamischen Belastungen widerstehendes Schutzsystem.
Als Schutz gegen Überhitzung sind ablativ abschmelzende Strukturbeschichtungen oder bei geringeren Belastungen der Außenhaut und der Struktur vorgesetzte Elemente in Form von einzeln verlegten Fliesen oder Kacheln, die als Strahlungsschild wirken, in Anwendung .

Infolge des ablativen Vorganges tritt jedoch eine erhebliche Veränderung der Form der Außenkontur der beschichteten Körper bzw. der beschichteten Struktur auf, die bei den genannten Belastungen beispielsweise beim Wiedereintritt in die Atmosphäre, insbesondere bei solchen Raumfahrzeugen die zur Erzeugung aerodynamischen Auftriebes Trag- bzw. Steuerflächen aufweisen, schädliche Veränderungen der Auftriebsverhältnisse und Steuerwirkungen hervorrufen kann.
Desgleichen können derartige Veränderungen der Innenwände von Strahldüsen von Raketentriebwerken oder von Steuerdüsen schwer zu kontrollierende Abweichungen von vorgegebenen Flugbahnen mit den daraus resultierenden Nachteilen zur Folge haben.
Ferner sind Fliesen oder Kacheln bekannter Wärmeschutzsysteme, infolge der zwischen den einzelnen Fliesen oder Kacheln notwendigen Dehnfugen nicht als Elemente der tragenden Struktur einsetzbar und stellen somit eine zusätzliche Gewichtskomponente dar.

Aus der **US-PS 4,344,591** sind metallische Kacheln z.B. Fliesen für den Wärmeschutz von Raumfahrzeugen bzw. Raumgleitern bekannt, die sich zur Gewichtsreduzierung aus mehreren aufeinander liegenden Schichten in Form einer Sandwichanordnung zusammensetzen.
Als tragende Strukturteile sind diese Wärmeschutzelemente jedoch ebenfalls nicht verwendbar.
Ablativ wirkende Hitzeschilde sind seit längerer Zeit bekannt und bei allen Wiedereintrittskörpern, die vor dem bekannten "Space Shuttle" entwickelt wurden, verwendet worden.
In neuerer Zeit ist ferner bekannt geworden, sogenannte Strahlungshitzeschilde aus Faserkeramik zu verwenden.

Die vorliegende Erfindung geht von Schutzsystemen der genannten Art unter Verwendung einer ablativ wirkenden Isolation aus und hat zur Aufgabe, ein Wärmeschutzsystem geringstmöglichen` zusätzlichen Gewichts bei gegenüber dem Bekannten wesentlich verbesserten Verhalten gegenüber thermischen und dynamischen Belastungen zu schaffen. Ferner ist es Aufgabe der Erfindung, eine Formveränderung der Außenkontur der belasteten Teile durch ablative Wirkungen zu verhindern oder zumindest wesentlich zu verringern.

Die gestellte Aufgabe ist erfindungsgemäß gelöst durch den Aufbau eines Schutzsystems nach den Merkmalen des Anspruchs 1 und in weiterer, vorteilhafter Ausgestaltung des Haupterfindungsgedankens nach den Merkmalen der dem Anspruch 1 folgenden Ansprüche.

Das erfindungsgemäße System zum Schutz der Struktur bzw. der Beplankung oder von Wandteilen gegen schädliche thermische und auch dynamische Belastungen ermöglicht einerseits eine wesentliche Reduzierung der Oberflächentemperaturen der Fahrzeugstruktur und Beplankung, auch bei extrem hohen Wärmelasten und andererseits eine weitgehende Neutralisierung der sich aus der Verwendung einer ablative Eigenschaften aufweisenden Isolationsschicht ergebenden Formänderungen.
Dadurch bleibt die sich bei den genannten Belastungen in Richtung auf die Fahrzeugstruktur bzw. Strukturplankung oder Wandteile fortschreitend ausbildende Ablatorkohleschicht durch die Anordnung der der ablativen Isolation vorgesetzten Schutzbeschichtung vollständig oder nahezu vollständig in ihrer Form erhalten.
Diesem Vorteil kommt besondere Bedeutung beim Einsatz des Wärmeschutzsystems an Bauteilen, wie z.B. Wedereintrittsfahrzeugen mit aerodynamisch wirkenden Tragflächen und auch hohen Wärmelasten ausgesetzten Ausbildungen an Raketendüsen zu.
Die bei bisher gebräuchlichen Ablatoren infolge extremer Wärmebelastung, insbesondere in Verbindung mit Staudruckbelastungen durch Erossion auftretende Änderung der Düsenquerschnitte, auch nur geringen Ausmaßes, die zu erheblichen Richtungsabweichungen von einer vorgegebenen Flugbahn und damit möglicheweise zum Scheitern einer gesamten Mission führen kann, ist mit dem erfindungsgemäßen Aufbau des Schutzsystems verhindert.

Infolgedessen, daß während der extremen Wärmebelastung die verkokte Schicht der ablativen Isolation infolge der Abdeckung mittels der dieser vorgesetzten Schutzbeschichtung nicht abgetragen werden kann, ergibt sich ferner eine wesentlich verbesserte Temperaturreduktion innerhalb der Isolationsschicht insgesamt und insbesondere in der Zone der Isolierschicht, die nicht oder noch nicht der Pyrolyse unterworfen ist.

In besonderem Maße ist das Wärmeschutzsystem vorteilhaft einsetzbar bei Eintritts- bzw. Wiedereintrittsfahrzeugen deren Außenkontur Abschnitte mit sehr gering bemessenen Radien aufweist und demzufolge extrem hohen örtlichen Wärmeübergängen, z.B. an Tragflügelspitzen, ausgesetzt sind. Ferner auch bei Fahrzeugen mit extrem geringen Maßen z.B. Eintritts- bzw. Wiedereintrittsfahrzeugen als Funktionsmodelle zu Testzwecken.
Ein erheblicher Prozentsatz der Schichtdicke der Isolier- bzw. Ablatorschichtdicke kann zur Verbesserung der Strukturfestigkeit herangezogen werden, da auslegungsbedingt bei einer maximalen Temperatur im Bereich der hinteren Wand der Isolierschicht bzw. der Strukturaußenwand von ca. 100° C noch nahezu 50 % unverkoktes Ablatormaterial nach dem Wiedereintritt erhalten bleibt, sodaß das unverkokte Material der Ablatorschicht als selbsttragender Bestandteil der Struktur oder zur Herstellung eines selbsttragenden Hitzeschildes beitragen kann.

Das erfindungsgemäße System ist im Hinblick auf den Schutz gegen Abgaslasten sowohl bei Körpern, die mit extrem hoher Geschwindigkeit in einem Medium bewegt werden, als auch bei ruhenden Körpern oder Teilen erdgebundener Anlagen, die Medien extrem hohen Strömungsgeschwindigkeit ausgesetzt sind vorteilhaft einsetzbar.

In der Zeichnung sind Ausführungsbeispiele eines gemäß der Erfindung ausgebildeten Schutzsystems dargestellt.
Die Ausführungsbeispiele sind nachfolgend anhand der Zeichnung näher beschrieben.
Es zeigt:
- Fig. 1: eine Ausführungsform des Schutzsystems in einem Ausschnitt an einer Fahrzeugstruktur, schematisiert und im Schnitt senkrecht zur Fahrzeugstruktur geschnitten darstellt,
- Fig. 2: in der gleichen Darstellungsweise wie in Fig. 1 ein Ausführungsbeispiel des Schutzsystems und
- Fig. 3: ebenfalls in einem Ausschnitt wie in Fig. 1 oder 2 dargestellt ein weiteres Ausführungsbeispiel des Schutzsystems.

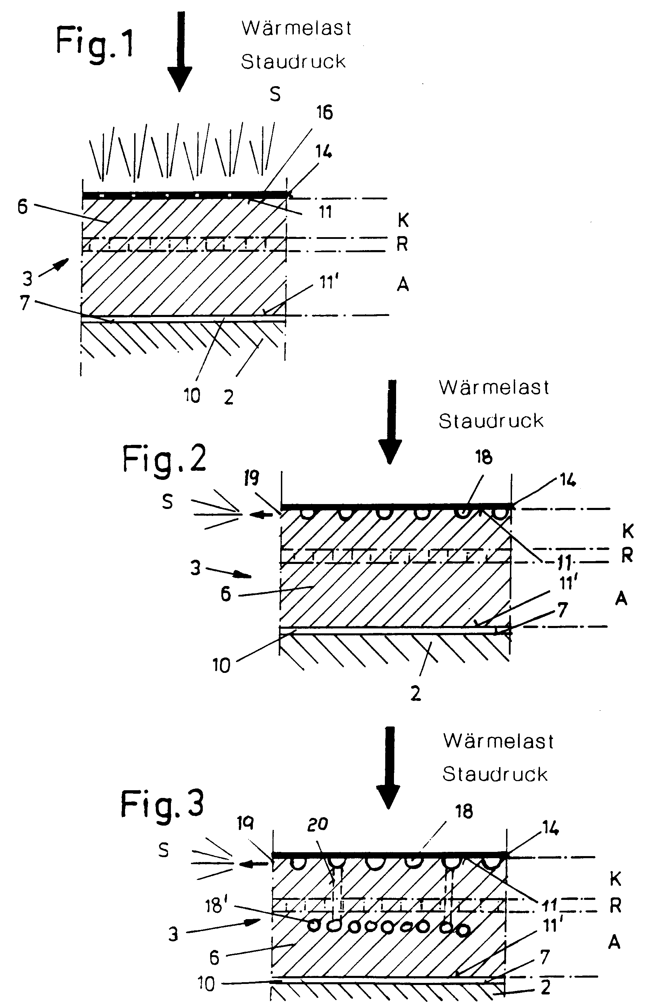

In den Darstellungen gemäß den Fig. 1 bis 3 und der nachfolgenden Beschreibung, wird davon ausgegangen, daß die Fahrzeugstruktur und damit das Schutzsystem einer über einen gewissen Zeitraum einwirkenden Wärmebelastung unterworfen und unter der Wärmebeaufschlagung bereits eine Zone **K** der Ablatorschicht in Richtung der Schichtdicke verkokt ist.
Die dargestellte, momentane Verkokungstiefe ist begrenzt durch die mit fortdauernder Wärmebelastung gegen die Außenwand der zu schützenden Bauteilstruktur **2** wandernde Pyrolyse- bzw. Reaktionszone **R**, wobei unterhalb der Reaktionszone **R** (Pyrolysezone) die Ablatorzone **A** noch unbeeinflußt ist und als Isolator wirkt.
Die Dicke der Isolationsschicht **6** ist dabei so bemessen, daß über den (begrenzten) Zeitraum extrem hoher thermischer Einwirkung hinaus ein wesentlicher, nicht verkokender Schichtdickenanteil als Isolationsschicht erhalten bleibt, in der die Temperatur auf den vorgegebenen Wert reduziert wird.
Durch Wechselwirkungen beim Verkokungsvorgang und Ableitung der Verkokungsgase wird eine wesentliche Herabsetzung der Oberflächentemperaturen der keramischen Schutzbeschichtung erreicht.
Im Folgenden soll der Begriff für die Bezeichnung der " ablativ wirkenden Beschichtung" sowohl die Wirkung als Isolator als auch die Wirkung als Ablator, mit der durch die Pyrolyse bedingten Gasausscheidung aus der Schicht **6** einschließen.
In der Zeichnung Fig. 1 bis 3 ist der Gesamtaufbau des Schutzsystems **3** in Verbindung mit einer angedeuteten Fahrzeugstruktur **2** gezeigt.
Das Schutzsystem **3** setzt sich in ein- oder mehrlagiger Anordnung zusammen aus der eigentlichen, ablativ wirkenden Beschichtung, der der Schicht vorgesetzten Schutzbeschichtung, sowie Gasableitkanälen und Gasableitungsöffnungen zur Abführung der zwischen der Schutzbeschichtung und der Ablatorschicht während des ablativen Vorganges entstehenden Gase zusammen.
Die Ablatorschicht **6** ist mittels ihrer hinteren Abschlußwand **10** auf die Bauteilaußenfläche **7** des Bauteils **2** aufgesetzt.
Die der thermischen Belastung bzw. der Staudruckbelastung ausgesetzte äußere Seite der Isolierschicht **6** mit ihrer Fläche **11** ist erfindungsgemäß abgedeckt durch die vorgesetzte äußere Schutzbeschichtung **14**, die hier aus faserkeramischem Werkstoff gebildet ist.
Die Schutzschicht kann jedoch auch aus metallischem Werkstoff, wie z.B. aus Titan oder dergleichen bestehen.

Wie aus der Zeichnung Fig. 1 weiter zu erkennen ist, sind in die Schutzbeschichtung **14** über ihre gesamte, flächige Erstreckung verteilt Durchlässe **16** zur Ableitung der sich zwischen der Isolierschicht bzw. Ablatorschicht **6** und der Schutzbeschichtung **14** während des Ablationsprozesses bildenden Druckgase gebildet. Die Durchlässe **16** münden dabei in die freie Atmosphäre, wobei die Gasaustrittsstrahlen hier mit **S** bezeichnet sind.

Beim Ausführungsbeispiel gemäß Fig. 2 sind in die der Schutzbeschichtung **14** zugewandte Oberfläche **11'** der Ablatorschicht **6,** sich in Richtung deren Oberfläche erstreckende Gasableitkanäle **18** eingearbeitet, die je einzeln oder in Gruppen zusammengefaßt an Auslaßöffnungen **19**, welche in den freien Raum (Atmosphäre) münden, angeschlossen sind. Über die Gasableitkanäle **18** und die zugehörigen Gasableitöffnungen **19** des Schutzsystems, werden die sich zwischen der Schutzschicht **14** und der Ablatorschicht **6** während des Ablationsvorganges ausbildenden Gase nach außen abgeführt und ein Abbau des sich zwischen den Schichten **6** und **14** aufbauenden Gasdruckes bewirkt. Durch die seitliche Ableitung der Ablationsgase muß deren Abführung hierbei nicht gegen die auf den zu schützenden Körper einwirkende dynamische Belastung erfolgen.
Die Gasableitkanäle **18** sind in bestimmten Abständen voneinander über die gesamte Fläche **11'** der ablativ wirkenden Schicht zueinander parallel verlaufend oder in der Art eines Kanalgitters angeordnet, wobei die Gasableitkanäle **18** bei gitterartiger Überschneidung an dem Überschneidungen miteinander in Verbindung stehen.
Im Außenbereich der Ablatorschicht **6** können Ringkanäle eingearbeitet sein, in die die Gasableitkanäle **18** einmünden, wobei die Ringkanäle ihrerseits über Öffnungen die Verbindung zum freien Raum (Atmosphäre) herstellen.

Gemäß dem in Fig. 3 der Zeichnung dargestellten Ausführungsbeispiel ist vorgesehen, außer den Gasableitkanälen **18** und Ringkanälen in der Oberfläche **11** der Ablatorschicht **6** in Richtung der Schutzbeschichtung **14** des zu schützenden Bauteils **2** in einer oder mehreren parallelen Ebenen weitere Gasableitkanäle **18'** zu bilden, um bei fortschreitender Verkokung des Ablators **6** während der thermischen Belastung und der Staudruckbelastung in Richtung auf das zu schützende Bauteil hin die Abführung der sich ausbildenden Ablatorgase zu erleichtern.

Ferner können zur besseren Ableitung der Druckgase in Richtung zur Schutzbeschichtung **14** hin, der Ablatorschicht **6** sich in Richtung der Isolierschichtdicke erstreckende Gasableitkanäle **20** vorgesehen sein, die mit den Gasableitkanälen **18** bzw. **18'** in den einzelnen Ebenen in Verbindung stehen.

## Patentansprüche

1. Schutzsystem für hohen thermischen Belastungen bzw. thermischen Belastungen und Staudruckbelastungen ausgesetzte Bauteile , insbesondere für Eintrittskörper oder Wiedereintrittskörper aus dem Raum in die Atmosphäre bzw. Teilen von Antrieben, wie Düsen und Brennkammern von Raketenmotoren, enthaltend
- eine dem zu schützenden Bauteil (**2**) vorgesetzte, ablativ wirkende Isolation,
**dadurch gekennzeichnet**, daß
- eine die ablativ wirkende Isolation in Einwirkungsrichtung der thermischen Belastung bzw. Staudruckbelastung abdeckende Schutzbeschichtung (**14**) vorgesehen ist und daß
- zwischen der Schutzbeschichtung (**14**) und der ablativ wirkenden Isolierung (6) ein die beim Ablationsprozeß (Pyrolyse) entstehenden Gase in die freie Atmosphäre abführende Gasableitung (**16; 18; 19**) vorgesehen ist.

2. Schutzsystem nach Anspruch 1, **dadurch gekennzeichnet**, daß die Schutzbeschichtung (**14**) gasdurchlässig ausgebildet ist.

3. Schutzsystem nach Anspruch 1, **dadurch gekennzeichnet**, daß in die ablativ wirkende Isolation (**6**) Gasableitkanäle (**18**) eingearbeitet sind und daß die Kanäle (**18**) mit nach außen in die freie Atmosphäre mündenden Gasableitöffnungen (**19**) in Verbindung stehen.

4. Schutzsystem nach Anspruch 1, **dadurch gekennzeichnet**, daß die Kanäle (**18**) in die der Schutzschicht (**14**) zugewandte Fläche (**11'**) und der Isolierschicht (**6**) eingearbeitet sind.

5. Schutzsystem nach Anspruch 1 und bzw. oder 3, **dadurch gekennzeichnet**, daß die Gasableitkanäle (**18**) in die der Ablator- bzw. Isolierschicht zugewandte Seite (**6**) der Oberfläche (**11**) der Schutzbeschichtung (**14**) eingearbeitet sind.

6. Schutzsystem nach mindestens einem der vorangehenden Ansprüche, **dadurch gekennzeichnet**, daß in die Schutzbeschichtung (**1**4) bzw. die ablativ wirkende Isolierung (**6**) außer den äußeren Ableitkanälen (**18**) in Richtung auf den zu schützenden Körper (**2**) hin weitere Gasableitkanalsysteme (**18'**) gebildet sind.

7. Schutzsystem nach Anspruch 1, **dadurch gekennzeichnet**, daß die Schutzbeschichtung (**14**) aus metallischem Werkstoff gebildet ist.

8. Schutzsystem nach Anspruch 1, **dadurch gekennzeichnet**, daß die Schutzbeschichtung (**14**) aus faserkeramischem Werkstoff besteht.

9. Schutzsystem nach mindestens einem der vorangehenden Ansprüche, **dadurch gekennzeichnet**, daß senkrecht zur Isolierbeschichtung (**6**) verlaufende und in die Kanäle (**18, 18'**) einmündende Gasableitkanäle (**20**) vorgesehen sind.
